# EUROPÄISCHE PATENTSCHRIFT

(11) **EP 1 033 286 B1**
(45) Veröffentlichungstag und Bekanntmachung des Hinweises auf die Patenterteilung: **29.09.2004**
(21) Anmeldenummer: 00100634.5
(22) Anmeldetag: 13.01.2000
(51) Int. Cl.: B60R 7/04

(54) **Mittelkonsole zwischen Sitzen eines Kraftfahrzeuges mit einem verschliessbaren Ablageraum**
Centre console between vehicle seats with a lockable storage compartment
Console centrale entre des sièges de véhicule avec un compartiment de rangement verrouillable

(30) Priorität: 02.03.1999 DE 19908909
(43) Veröffentlichungstag der Anmeldung: 06.09.2000
(73) Patentinhaber: DaimlerChrysler AG, 70567 Stuttgart (DE)
(72) Erfinder: Gackstatter, Matthias, 71063 Sindelfingen (DE)

(56) Entgegenhaltungen:
- DE-A- 3 501 714
- DE-A- 19 856 979
- DE-C- 19 615 743
- PATENT ABSTRACTS OF JAPAN vol. 006, no. 267 (M-182), 25. Dezember 1982 (1982-12-25) & JP 57 158140 A (NISSAN JIDOSHA KK), 29. September 1982 (1982-09-29)
- PATENT ABSTRACTS OF JAPAN vol. 018, no. 386 (M-1641), 20. Juli 1994 (1994-07-20) & JP 06 107073 A (SUZUKI MOTOR CORP), 19. April 1994 (1994-04-19)
- PATENT ABSTRACTS OF JAPAN vol. 1998, no. 03, 27. Februar 1998 (1998-02-27) & JP 09 301080 A (ARACO CORP), 25. November 1997 (1997-11-25)

## Beschreibung

Die Erfindung betrifft eine Mittelkonsole zwischen Sitzen eines Kraftfahrzeuges mit einem verschließbaren Ablageraum nach dem Oberbegriff des Anspruchs 1.

Eine Mittelkonsole mit einem verschließbaren Ablageraum ist beispielsweise aus der DE 28 22 378 C2 bekannt.

Aus der DE 38 07 880 C2 ist bereits eine Mittelkonsole mit einem ersten Ablageraum bekannt, in dem sich herausnehmbar ein zweiter Ablageraum befindet. Bei dieser bekannten Ausführung wird der Deckel zur Seite aufgeklappt, wobei ein Aufklappen zusammen mit dem zweiten Ablageraum oder auch ohne diesen wahlweise möglich ist. Bei dieser Ausführung wird der zur Seite aufklappbare Deckel in geöffnetem Zustand als störend empfunden. Außerdem ist ein komplizierter Mechanismus zum Aufklappen des Ablageraums zusammen mit dem Deckel erforderlich.

Die DE 196 15 743 C1 zeigt eine Armlehne mit einem Ablageraum, der durch einen linear verschiebbaren Deckel verschließbar ist.

Aus der JP 57 158140 ist eine Mittelkonsole gemäß dem Oberbegriff des Anspruchs 1 bekannt. Dort ist eine Ablageschale gezeigt, die aus einem Ablageraum linear ausziehbar ist.

Bei einer solchen Mittelkonsole beschäftigt sich die Erfindung mit dem Problem, die Ablagemöglichkeiten in dem Ablageraum zu verbessern.

Diese Aufgabe wird durch eine Mittelkonsole mit den Merkmalen des Anspruchs 1 gelöst.

Die erfindungsgemäße Lösung weist den Vorteil auf, dass ein nach hinten geschobener geöffneter Deckel die Personen auf beiden benachbarten Sitzen nicht beeinträchtigt. Außerdem bietet die erfindungsgemäße Vorrichtung den Vorteil, dass ein vorderer Raum des ersten Ablageraumes von der Ablageschale frei gehalten werden kann, so daß dieser Raum bei einem teilweise geöffneten Deckel beispielsweise zur Aufnahme eines oder mehrerer Getränkebehälter benutzt werden kann. Des weiteren ist der Deckel auf seiner nach oben liegenden Seite zweckmäßigerweise gepolstert, um als Armlehne dienen zu können. Auch ist der Deckel in an sich bekannter Weise nach vorne über das Ablagefach hinaus schiebbar, um eine nach vorne vorgezogene Armlehne erhalten zu können.

Ein nachfolgend noch näher beschriebenes Ausführungsbeispiel der Erfindung ist in der Zeichnung dargestellt.

In dieser zeigen
- Fig. 1: einen kleinen Eckbereich als Ansicht einer und den übrigen Bereich als Längsschnitt durch eine Mittelkonsole mit einem teilbaren Ablageraum nach Linie I-I in Fig. 2,
- Fig. 2: eine Draufsicht auf eine Mittelkonsole nach Fig. 1 mit einem teilweise geöffneten Deckel,
- Fig. 3: einen Schnitt längs der Linie III-III in Fig. 2 als Ausschnitt,
- Fig. 4: einen Schnitt nach Linie IV-IV in Fig. 3,
- Fig. 5: einen schnitt nach Linie V-V in Fig. 2 als Ausschnitt.

Ein erster Ablageraum 1 einer Mittelkonsole zwischen den Vordersitzen eines Kraftfahrzeuges ist durch einen nach hinten verschiebbaren Deckel 2 je nach Schiebestellung des Deckels geöffnet oder verschlossen.

Der Deckel 2 ist über Gleitstücke 3 auf an den beiden Seitenwänden des ersten Ablageraumes 1 vorgesehenen Schienen 4 verschiebbar. Die Schienen 4 ragen nach hinten aus dem ersten Ablageraum heraus. Außerhalb des Ablageraumes können die Schienen in fahrzeugseitige Einbauten integriert sein, so daß sie optisch nicht störend wahrnehmbar sind.

In dem ersten Ablageraum 1 befindet sich oberhalb von dessen Boden als zweiter Ablageraum eine Ablageschale 5. Diese Ablageschale 5 ist ebenfalls in Schienen 6 an den Seitenwänden des ersten Ablageraumes 1 längsverschiebbar gelagert. Zwischen dem Deckel 2 und der Ablageschale 5 sind durch gegenseitiges Verrasten unterschiedliche Relativstellungen zueinander möglich. Es ist wahlweise möglich, die Ablageschale 5 mit dem Deckel 2 zu verrasten oder einen Zustand einzustellen, bei dem der Deckel 2 und die Ablageschale 5 gegeneinander bewegbar sind. Je nach dem, von welcher der beiden Möglichkeiten Gebrauch gemacht wird, ist entweder der Deckel 2 für sich allein oder zwangsläufig zusammen mit der Ablageschale 5 verschiebbar. Um aus dem Ablageraum 1 nach hinten heraus verschiebbar zu sein, besitzt die Rückwand des Ablageraumes 1 eine der Querschnittsfläche der Ablageschale 5 angepaßte Öffnung 7.

Ist beim Öffnen des Innenraumes der Mittelkonsole durch Verschieben des Deckels 2 ein Zugang zu der Ablageschale 5 gewünscht, so wird der Deckel 2 in einem gegenüber der Ablageschale 5 unverrasteten Zustand nach hinten geschoben.

Das Ein- und Ausschalten einer Verrastung zwischen dem Deckel 2 und der Ablageschale 5 erfolgt über Betätigungsmittel 8, die über eine Taster 9 bedienbar sind.

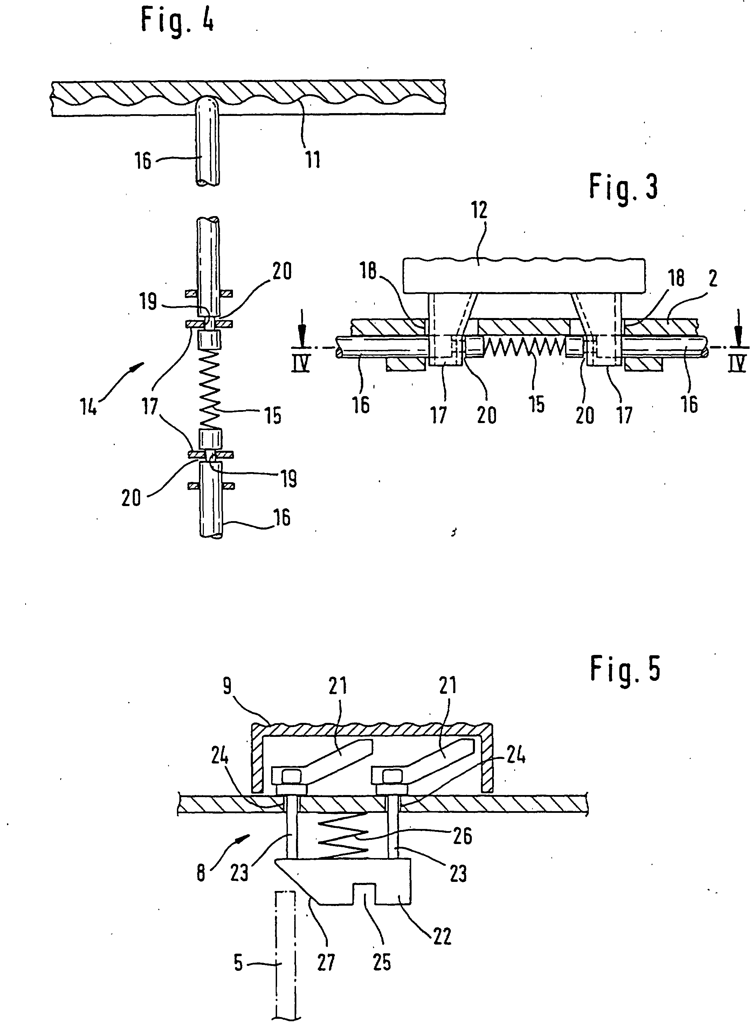

Solche Betätigungsmittel sind in Fig. 5 dargestellt. Deren Aufbau und Funktion ist wie folgt.

Der Taster 9 ist ein an den Deckel 2 in dessen Schieberichtung gelagerter Schieber. In dem Taster 9 sind in Führungsnuten 21 ein Verschlußteil 22 gelagert, das mit Stegen 23 Öffnungen 24 des Deckels durchgreift. In den Öffnungen 24 sind die Stege 23 geführt. Die von dem Verschlußteil 22 abgewandten Enden der Stege 23 sind verschiebbar in den Führungsnuten 21 gelagert. Die Führungsnuten 21 weisen einen Verlauf auf, durch den bei einem Verschieben des Tasters 9 das Verschlußteil 22 in einer senkrecht zu der Ebene des Deckels 2 verlaufenden Richtung bewegt wird, wodurch das Verschlußteil 22 zwischen einer Verschluß- und Öffnungsstellung verschiebbar ist. In der Verschlußstellung des Verschlußteiles 22 kann die Ablageschale 25 über beispielsweise einen ihrer Randbereiche in einer an dem Verschlußteil 22 vorgesehenen Verriegelungsnut 25 arretiert werden. Eine zwischen dem Verschlußteil 22 und dem Deckel 2 vorgesehene Druckfeder 26 sorgt für eine Ruhestellung des Tasters 9, in der sich dieser in Verriegelungsfunktion befindet.

Um beim Schließen des Deckels 2 eine automatische Verriegelung zwischen Deckel 2 und Ablageschale 9 ohne eine aktive Betätigung des Tasters 9 erreichen zu können, ist das Verschlußteil 22 mit einer Rampe 27 versehen, über die das Verschlußteil 22 mit der Ablageschale 5 in einen gegenseitig verriegelten Zustand bringbar ist.

Bei einer durch den Taster 9 gegebenen Verrastung zwischen dem Deckel 2 und der Ablageschale 5 wird bei einem Öffnen des Deckels 2 durch Zurückschieben nach hinten die Ablageschale 5 aus dem ersten Ablageraum 1 herausgeschoben. Dadurch ist der bei eingeschobener Ablageschale 5 unterhalb dieser liegende Bereich des ersten Ablageraumes 1 zugänglich.

Die Länge der Ablageschale 5 kann so gewählt sein, daß in dem vorderen Bereich des Ablageraumes 1 ein Freiraum verbleibt. Dieser Freiraum kann bei einem teilweisen Öffnen des Deckels 2 beispielsweise als Aufnahmeraum für Getränkebehälter verwendet werden. Zu diesem Zweck können entsprechende Ausnehmungen 10 in dem vorderen Bodenbereich des ersten Aufnahmeraumes 1 vorgesehen sein.

Der Deckel 2 ist in verschiedenen Öffnungsstellungen an den Seitenwänden des ersten Aufnahmeraumes verrastbar. An den Seitenwänden sind zu diesem Zweck Rastaufnahmen 11 vorgesehen. Die Verrastung kann derart ausgeführt sein, daß sie sich jeweils durch ein kräftiges Verschieben des Deckels 2 aufheben läßt. Für ein Lösen aus Verraststellungen kann aber auch ein besonderer Lösemechanismus notwendig sein, der über einen Taster 12 an dem Deckel 2 betätigbar ist.

Bei diesem in Fig. 3 gezeigten Lösemechanismus betätigt ein in dem Deckel 2 gelagerter Taster 12 ein mit den Rastaufnahmen 11 zusammenwirkendes Verrastungsmittel 14. Dieses Verrastungsmittel 14 besitzt zwei fluchtend zueinander an dem Deckel 2 quer zu dessen Schieberichtung verschiebbar gelagerte, gegeneinander durch eine Druckfeder 15 gespannte Räststangen 16. Diese Raststangen 16 werden durch die zwischen ihnen gespannte Druckfeder 15 mit ihren von der Druckfeder 15 abgewandten Enden in die Rastaufnahme 11 gedrückt und bewirkten dadurch eine Verrastung zwischen Deckel 2 und den beiden Seitenwänden des ersten Ablageraumes 1. Der Taster 12 durchgreift mit zwei an diesen angeformten Stegen 17 Aufnahmeöffnungen 18 des Deckels 2. Die Stege 17 sind jeweils mit einer zu dem freien Stegende offenen Führungsnut 19 versehen, in die die jeweils federbeaufschlagten Enden der Raststangen 16 mit zugeordneten Aufnahmenuten 20 greifen. Die Stege 17 sind derart an dem Taster 12 angeformt, daß bei einer Bewegung des Tasters 12 senkrecht zu der Ebene des Deckels 2 eine gegengerichtete Längsverschiebung der Raststangen 16 durch das Zusammenwirken der Führungs- und Aufnahmenuten 19 und 20 erfolgt. Dabei bewirkt die Druckfeder 19 eine Ruhestellung des Rasters 12, bei der eine Verrastung gegeben ist. Wird der Taster 12 durch Drücken in Richtung auf den Deckel 2 betätigt, wird die Verrastung aufgehoben.

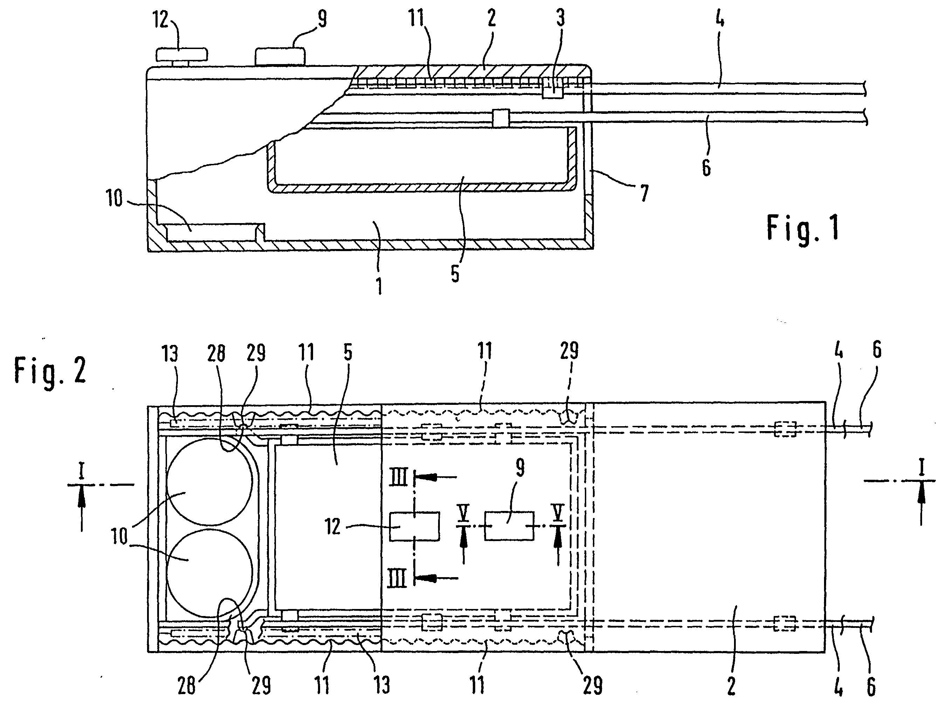

Die Ablageschale 5 besitzt Rastzungen 28 (Fig. 2), über die sie in zumindest zwei Zuordnungsstellung zu dem ersten Ablageraum 1, nämlich einer voll eingeschobenen und einer voll herausgeschobenen Position, verrastbar ist. In den verrasteten Positionen greifen die Rastzungen 28 jeweils in komplementär ausgebildete Rastaufnahmen 29 an den Seitenwänden des ersten Ablageraumes 1 an.

Damit der geöffnete Deckel 2 aus seiner Öffnungsstellung automatisch in seine Schließstellung gelangen kann, ist er über Zugfedern 13 mit der vorderen Stirnwand des ersten Ablageraumes 1 verbunden. Diese Zugfedern 13 werden beim Öffnen des Deckels 2 gespannt. Um ein ungewolltes Schließen des Deckels 2 zu vermeiden, muß der Deckel 2 in seinen Öffnungsstellungen jeweils arretiert sein. Diese Arretierungen können mit dem durch den Taster 12 bedienbaren Lösemechanismus aufgehoben werden. Selbstverständlich ist es auch möglich, eine Bedientaste für diesen Lösemechanismus im vorderen Bereich der Mittelkonsole anzubringen, um eine besonders günstige Bedienbarkeit zu erhalten.

Um als Armlehne zu dienen, ist der Deckel 2 auf seiner Oberseite gepolstert. Auch kann der Deckel 2 nach vorne über das Ablagefach hinaus schiebbar sein, um in diesem Zustand eine besonders bequeme Armauflage zu bieten.

## Patentansprüche

1. Mittelkonsole für eine Anordnung zwischen Sitzen eines Kraftfahrzeuges mit einem oben durch einen Deckel (2) verschließbaren Ablageraum, der aus einem ersten Ablageraum (1) und einem innerhalb des ersten Ablageraumes (1) liegenden zweiten Ablageraum in der Form einer Ablageschale (5) besteht, wobei die Ablageschale (5) aus dem ersten Ablageraum (1) herausschiebbar ist
**gekennzeichnet durch** die Merkmale,
dass der Deckel (2) in Längsrichtung der Konsole verschiebbar ist und die Ablageschale (5) in Schieberichtung des Deckels aus dem ersten Ablageraum (1) herausschiebbar ist und der Deckel (2) zur Mitnahme der Ablageschale (5) temporär mit dieser koppelbar ist.

2. Mittelkonsole nach Anspruch 1,
**dadurch gekennzeichnet,**
**dass** der Deckel (2) in geöffnetem Zustand durch Federkraft in Schließrichtung beaufschlagt und in verschiedenen Offenstellungen verrastbar ist.

3. Mittelkonsole nach Anspruch 1 oder 2,
**dadurch gekennzeichnet,**
**dass** die Ablageschale (5) ausschließlich außerhalb eines vorderen Bereiches des ersten Ablageraumes (1) liegen kann.

## Claims

1. A central console for an arrangement between seats in a motor vehicle with a storage space which can be closed at the top by a cover (2) and consists of a first storage space (1) and a second storage space positioned inside said first storage space (1) which takes the form of a storage tray (5), it being possible to move the storage tray (5) out of the first storage space (1),
**characterised by** the features
that the cover (2) can be moved lengthways in relation to the console, the storage tray (5) can be moved out of the first storage space (1) in the direction of movement of the cover and the cover can be connected temporarily to the storage tray (5) in order to move them simultaneously.

2. A central console in accordance with claim 1,
**characterised in that**
when open the cover (2) is subject to spring resistance in the direction of closure and can be locked into several open positions.

3. A central console in accordance with claim 1 or 2,
**characterised in that**
the storage tray (5) can only be positioned outside a front area of the first storage space (1).

## Revendications

1. Console centrale à disposer entre les sièges d'un véhicule automobile avec un compartiment de rangement refermable en haut par un couvercle (2), le compartiment étant composé d'un premier compartiment de rangement (1) et d'un deuxième compartiment de rangement sous forme d'un bac de rangement (5) situé à l'intérieur du premier compartiment de rangement (1), le bac de rangement (5) pouvant coulisser hors du premier compartiment de rangement (1), **caractérisée en ce que** le couvercle (2) peut coulisser dans la direction longitudinale de la console et le bac de rangement (5) peut coulisser hors du premier compartiment de rangement (1) dans la direction de coulissement du couvercle et le couvercle (2) peut être couplé provisoirement au bac de rangement (5) pour l'entraîner.

2. Console centrale selon la revendication 1, **caractérisée en ce que** le couvercle (2) est sollicité à l'état ouvert par une force de ressort dans la direction de fermeture et peut s'enclencher dans différentes positions d'ouverture.

3. Console centrale selon la revendication 1 ou 2, **caractérisée en ce que** le bac de rangement (5) peut se trouver exclusivement à l'extérieur d'une zone avant du premier compartiment de rangement (1).
